# EUROPÄISCHE PATENTANMELDUNG

(11) **EP 2 479 404 A1**
(43) Veröffentlichungstag der Anmeldung: **25.07.2012**
(21) Anmeldenummer: 12152146.2
(22) Anmeldetag: 23.01.2012
(51) Int. Cl.: F02C 3/34, F02C 9/16

(54) **Regelung der Gaszusammensetzung bei einem Gasturbinenkraftwerk mit Abgasrezirkulation**

(30) Priorität: 24.01.2011 CH 1162011
(71) Anmelder: Alstom Technology Ltd, 5400 Baden (CH)
(72) Erfinder: Rofka, Stefan, 5415 Nussbaumen (CH); Hoffmann, Jürgen, 5417 Untersiggenthal (CH); Benz, Eribert, 5413 Birmenstorf (CH); Sander, Frank, 5415 Rieden AG (CH); Nicklas, Martin, 5430 Wettingen (CH)

(57) **Zusammenfassung**

Die Erfindung betrifft ein Verfahren zum Betrieb eines Gasturbinenkraftwerkes mit Abgasrezirkulation, in dem abhängig von dem Betriebszustand der Gasturbine (6) eine Soll- Konzentration mindestens eines Bestandteils in einem Abgasstrom und/ oder dem Ansaugstrom der Gasturbine (6) nach Zumischung der rezirkulierten Abgase bestimmt wird. Weiter wird die Ist- Konzentration dieses mindestens einen Bestandteils im Abgasstrom und/oder im Ansaugstrom gemessen und ein Regelelement zur Regelung des Rezirkulationsstroms abhängig von der Soll-/ Ist- Abweichung geregelt.

Weiter betrifft die Erfindung ein Gasturbinenkraftwerk mit Abgasrezirkulation beschrieben, dass zur Durchführung des Verfahrens einen Regler, in dem eine Soll- Konzentration mindestens eines Bestandteils in einem Abgasstrom oder des Ansaugstrom der Gasturbine (6) bestimmt wird, und ein Messinstrument (36, 37, 38) zur Messung der Ist-Konzentration dieses mindestens einen Bestandteils umfasst.

## Beschreibung

### TECHNISCHES GEBIET

Die vorliegende Erfindung betrifft ein Verfahren und System zur Regelung der Gaszusammensetzung einer Gasturbine mit Abgasrezirkulation.

### STAND DER TECHNIK

Die Rezirkulation von Abgasen ist eine Technologie, welche grundsätzlich für unterschiedlichste Zwecke bei Gasturbinen eingesetzt werden kann. So beispielsweise für die Kontrolle der Emission, für die Reduktion des Abgasvolumens für die Kohlendioxid-Abscheidung etc. Bei der Rezirkulation von Abgasen bei einer Gasturbine wird ein wesentlicher Anteil des Abgases aus dem gesamten Abgasstrom abgezweigt und wird normalerweise, nach Kühlung und Reinigung, dem Eingangsmassenstrom der Turbine respektive dem Kompressor der Turbine wieder zugeführt, wobei der rückgeführte Abgasstrom mit frischer Luft vermischt wird, und diese Mischung anschliessend dem Kompressor zugeführt wird.

Vorteilhaft kann durch Abgasrezirkulation der Kohlendioxid- Partialdruck in den Abgasen erhöht werden, um die Leistungsverluste und Wirkungsgradverluste von Kraftwerken mit Kohlendioxid-Abscheidung zu reduzieren. Weiter ist Abgasrezirkulation mit dem Ziel vorgeschlagen worden, die Sauerstoffkonzentration in den Ansauggasen von Gasturbinen zu reduzieren, um dadurch die NOx- Emissionen zu reduzieren.

Zur Abgasrezirkulation beschreibt beispielsweise die US 7536252 B1 ein Verfahren zum Steuern eines Abgasrezirkulationsstroms einer Turbomaschine, der über ein Abgasrezirkulationssystem zu dem Eintritt der Turbomaschine zurückgeführt wird. Bei diesem Verfahren wird ein Soll- Abgasrezirkulationsanteil bestimmt, der den Anteil des Abgasstroms an dem Eintrittsstrom der Turbomaschine beinhaltet, und der Ist-Wert auf den Soll- Wert eingestellt wird.

Aus der EP2248999 ist ein Kraftwerk mit Abgasrezirkulation sowie ein Verfahren zum Betrieb eines derartigen Kraftwerks bekannt, indem lastabhängig die Rezirkulationsrate und die Temperatur auf die die rezirkulierten Abgase rückgekühlt werden geregelt wird. Diese wie auch andere bekannte Veröffentlichungen nutzen eine Rezirkulationsrate, d.h. das Verhältnis von rezirkuliertem Abgas zu Ansaugmassenstrom der Turbomaschine oder den Anteil von rezirkuliertem Abgas an dem Ansaugmassenstrom der Turbomaschine. Praktisch stellt sich bei den genannten Verfahren das Problem, den Anteil oder das Verhältnis zuverlässig zu bestimmen. Sowohl der Ansaugmassenstrom als auch der Rezirkulationsmassenstrom sind nur mit grossem Aufwand und ungenau messbar.

### DARSTELLUNG DER ERFINDUNG

Der vorliegenden Erfindung ist die Aufgabe gestellt, ein Verfahren zum zuverlässigen Betrieb eines Gasturbinenkraftwerkes mit Abgasrezirkulation und Regelung der Abgasrezirkulation anzugeben.

Erfindungsgemäss wird diese Aufgabe durch den Gegenstand der unabhängigen Ansprüche gelöst. Der Kern der Erfindung ist ein Verfahren, bei welchem ein Gehalt oder eine Konzentration (Stoffmengen- oder Massenkonzentration) wenigstens eines Bestandteiles eines Gasstromes des Gasturbinenprozesses direkt zur Regelung eines Stellgliedes für die Abgasrezirkulation genutzt wird.

In diesem Verfahren zum Betrieb eines Gasturbinenkraftwerkes mit Abgasrezirkulation, welches eine Gasturbine, einen Abhitzedampferzeuger und einen Abgasteiler, der die Abgase in einen ersten Abgasstrom zur Rezirkulation in einen Ansaugstrom der Gasturbine und in einen zweiten Abgasstrom zur Abgabe an die Umgebung teilt, sowie ein Regelelement zur Regelung des Rezirkulationsstroms umfasst, wird abhängig von dem Betriebszustand der Gasturbine eine Soll- Konzentration mindestens eines Bestandteils in einem Abgasstrom und/ oder dem Ansaugstrom der Gasturbine nach Zumischung der rezirkulierten Abgase bestimmt. Weiter wird die Ist- Konzentration dieses mindestens einen Bestandteils im Abgasstrom und/oder im Ansaugstrom gemessen und das Regelelement zur Regelung des Rezirkulationsstroms abhängig von der Soll- Ist-Abweichung geregelt.

Eine Ausgestaltung des Verfahrens ist dadurch gekennzeichnet, dass die Sauerstoffkonzentration in einem Abgasstrom mit dem Stellglied geregelt wird. Dabei kann die Konzentration in dem ersten Abgasstrom, der rezirkuliert wird, die Konzentration in dem zweiten Abgasstrom, der an die Umgebung abgegeben wird, oder die Konzentration des Abgasstroms vor der Abzweigung des Rezirkulationsstroms, geregelt werden.

Eine alternative Ausgestaltung des Verfahrens ist dadurch gekennzeichnet, dass die Kohlendioxid- Konzentration in einem der Abgasströme geregelt wird. Weiter kann eine Regelung von Kohlendioxid- und Sauerstoffkonzentration durchgeführt werden.

Gemäss einer weiteren Ausgestaltung des Verfahrens wird die Sauerstoffkonzentration in dem Ansaugstrom der Gasturbine nach Zumischung der rezirkulierten Abgase geregelt.

Eine alternative Ausgestaltung des Verfahrens ist dadurch gekennzeichnet, dass die Kohlendioxid- Konzentration in dem Ansaugstrom der Gasturbine nach Zumischung der rezirkulierten Abgase geregelt wird. Weiter kann eine Regelung von Kohlenstoff- und Sauerstoffkonzentration in dem Ansaugstrom der Gasturbine nach Zumischung der rezirkulierten Abgase durchgeführt werden.

In den Fällen, in denen eine Regelung von Sauerstoff- und Kohlendioxid- Konzentration vorgesehen ist, ist eine Gewichtung der beiden Regelparameter vorteilhaft, da mit nur einer Stellgrösse zwei Parameter beeinflusst werden. Beispielsweise können Sauerstoffkonzentration und Kohlendioxid- Konzentration gleich gewichtet werden. In einem anderen Beispiel kann, um eine vollständige Verbrennung zu gewährleisten, der Sauerstoffkonzentration beispielsweise zwei oder dreimal so stark gewichtet werden, wie die Kohlendioxid- Konzentration.

Prinzipiell sind die Sauerstoff- und die Kohlendioxid- Konzentration miteinander gekoppelt.

Eine Regelung beider Parameter ist beispielsweise Vorteilhaft, wenn sich die Brennstoffzusammensetzung, insbesondere der Wasserstoffgehalt des Brennstoffes ändert, oder Sauerstoff zu den Brenngasen zugemischt wird.

Weiter ist eine Kombination der Regelung der Sauerstoff- und/ oder Kohlendioxid-Konzentration in einem Abgasstrom und der Konzentration in dem Ansaugstrom der Gasturbine nach Zumischung der rezirkulierten Abgase vorgeschlagen. Für diese Verfahren ist eine Gewichtung der beiden Regelparameter vorteilhaft, da mit nur einer Regelgrösse zwei oder mehr Parameter beeinflusst werden

In einer weiteren Ausführung ist das Verfahren dadurch gekennzeichnet, dass eine SollKonzentration in Abhängigkeit von der Leistung des Gasturbinenkraftwerks bestimmt wird. Anstelle der Leistung kann auch eine Abhängigkeit von einem anderen wichtigen Betriebsparameter oder einer Kombination von Betriebsparametern, wie der Turbineneintrittstemperatur (z.B. nach ISO 2314), der Heissgastemperatur, der Turbinenaustrittstemperatur, dem Verdichteraustrittsdruck oder der Position der verstellbaren Verdichtereintrittschaufeln, benutzt werden. Weiter kann die Sollkonzentration in Abhängigkeit von den Umgebungsbedingungen, insbesondere von der Umgebungstemperatur oder der Verdichtereintrittstemperatur, bestimmt werden. Dabei ist die Soll- Konzentration beispielsweise eine Funktion von einem oder einer Kombination der genannten Parameter.

Die maximale Abgasrezirkulation ist oft durch den für eine stabile, vollständige Verbrennung nötige Sauerstoffkonzentration beschränkt. Eine stabile, vollständige Verbrennung bedeutet in diesem Zusammenhang, dass die CO- (Kohlenmonoxid) und UHC- (unburned hydrocarbon = unverbrannte Kohlenwasserstoffe) Emissionen unter den zulässigen Grenzwerten bleiben, und dass die Brennkammerpulsationen im zulässigen Bereich bleiben. Die zulässigen CO- und UHC Emissionen sind typischerweise in der Grössenordnung von ppm (meist im Einstelligen ppm Bereich). Die Pulsationen, die bei Sauerstoffmangel mit steilem Gradienten steigen können, sollten unter 10% des Brennkammerdruckes bleiben. Typischerweise bleiben sie unter 1 bis 2 % des Brennkammerdrucks. Bei Anstieg der CO- Emissionen, der UHC- Emissionen oder den Brennkammerpulsationen über einen Grenzwert wird durch das Regelelement der erste Abgasstrom nachgeregelt. Beispielsweise wird der erste Abgasstrom reduziert, sobald ein Grenzwert der CO- Emissionen, der UHC- Emissionen oder der Brennkammerpulsationen überschritten wird.

In einer Ausführung des Verfahren wird die Soll- Konzentration von Kohlendioxid oder Sauerstoff in Abhängigkeit von den CO- Emissionen, den UHC- Emissionen oder den Brennkammerpulsationen oder einer Kombination von zwei oder allen drei Parametern korrigiert.

Ein weiteres vorteilhaftes Verfahren zeichnet sich dadurch aus, dass die rezirkulierten Abgase in einem Abgasrückkühler auf eine Rückkühltemperatur gekühlt werden, wobei die Rückkühltemperatur als Funktion der Leistung bestimmt wird. Anstelle der Leistung kann auch eine Abhängigkeit von einem anderen wichtigen Betriebsparameter oder einer Kombination von Betriebsparametern, wie der Turbineneintrittstemperatur, der Heissgastemperatur, der Turbinenaustrittstemperatur, dem Verdichteraustrittsdruck oder der Position der verstellbaren Verdichtereintrittschaufeln benutzt werden. Weiter kann die Rückkühltemperatur in Abhängigkeit von den Umgebungsbedingungen, insbesondere von der Umgebungstemperatur, bestimmt werden. Dabei ist die Rückkühltemperatur beispielsweise eine Funktion von einem oder einer Kombination der genannten Parameter.

Um eine stabile, schnelle Regelung der Zusammensetzung des Ansaugstromes der Gasturbine zu gewährleisten, wird weiter vorgeschlagen, dass der Ansaugdruckverlust zwischen Umgebung und Zumischung der rezirkulierten Abgase in den Ansaugstrom der Gasturbine und der Abgasdruckverlust zwischen dem Abgasteiler und der Umgebung gemessen wird, um daraus die Druckdifferenz zu bestimmen, die ohne zusätzliche Abgasgebläse oder Booster zur Abgasrezirkulation zwischen Abgasteiler und Zumischung verfügbar ist. Alternativ kann auch die Druckdifferenz zwischen Abgasteiler und Position der Zumischung der Abgase in den Ansaugstrom der Gasturbine direkt gemessen. Abhängig von der Druckdifferenz wird die Regelung des Regelelementes korrigiert.

Diese Regelkorrektur ist beim transienten Betrieb der Gasturbine, insbesondere bei schnellen Transienten vorteilhaft, da beispielsweise durch ein Schliessen der verstellbaren Verdichterleitschaufeln der Ansaugmassenstrom reduziert wird. Dadurch werden die Ansaugdruckverluste, sowie Druckverluste über den Ansaugfilter kleiner und der Unterdruck vor dem Eintritt der Gasturbine kleiner. Gleichzeitig gehen mit dem reduzierten Massenstrom die Abgasdruckverluste, wie beispielsweise die Druckverluste über ein der Gasturbine nachgeschaltetes Kohlendioxid- Abscheidesystem zurück. Diese Druckverluste ändern sich zwischen Teillast und Volllast um einen Faktor von 2 bis 3. Bei Volllast ist die Summe dieser beiden Druckverluste typischerweise in der Grössenordnung von 30 bis 50% der zur Abgasrezirkulation benötigten Druckdifferenz, so dass Änderungen in dem Differenzdruck bei unveränderter Einstellung des Regelelementes zu signifikanten Änderungen in dem Rezirkulationsstrom und damit in der Zusammensetzung des Ansaugstromes als auch der Zusammensetzung des Abgasstromes führen. Weiter sind Rezirkulationssysteme denkbar, die ganz ohne zusätzliches Abgasgebläse und nur mit der Druckdifferenz arbeiten. Diese Systeme reagieren entsprechend noch sensibler auf Änderungen der Druckdifferenz.

In einer Ausführungsform des Verfahrens wird ein regelbares Abgasgebläse als Regelelement zur Regelung des Rezirkulationsstroms verwendet. Die Leistung des Abgasgebläses kann beispielsweise in Abhängigkeit von Druckdifferenz zwischen Abgasteiler und Zumischung der Abgase in den Ansaugstrom der Gasturbine geregelt werden. Typischerweise wird die Leistung des Abgasgebläses umgekehrt proportional zur Druckdifferenz zwischen Abgasteiler und Zumischung der Abgase in den Ansaugstrom der Gasturbine geregelt.

In einer weiteren Ausführungsform des Verfahrens wird eine Klappe und/ oder ein Ventil als Regelelement zur Regelung des Rezirkulationsstroms verwendet. Typischerweise wird die Öffnung der Klappe in Durchlassrichtung zur Abgasrezirkulation oder die Öffnung des Ventils umgekehrt proportional zur Druckdifferenz zwischen Abgasteiler und Zumischung der Abgase in den Ansaugstrom der Gasturbine geregelt. Dabei kann der Abgasteiler selber auch als Regelelement, z.B. als Klappe, ausgeführt sein.

Weiter wird die Kombination eines Regelverfahrens, bei dem Abhängig von der zur Druckdifferenz zwischen Abgasteiler und Zumischung der Abgase in den Ansaugstrom der Gasturbine ein regelbares Abgasgebläse und eine Klappe und/ oder ein Ventil als Regelelemente zur Regelung des Rezirkulationsstroms verwendet werden, vorgeschlagen.

Aufgrund der grossen Volumina der Rezirkulaitonsleitungen, des Abhitzekessels, von Rückkühlern oder Wärmetauschern, die typischerweise zwischen einer Messstelle zur Bestimmung einer Konzentration mindestens eines Bestandteils des Abgasstroms dem Eintritt der Gasturbine liegen und der, zur Reduktion der Druckverluste, moderaten Strömungsgeschwindigkeiten in diesen Volumina, vergeht eine gewisse Zeitspanne zwischen dem Augenblick, an dem die Gase mit einer bestimmten Konzentration eines Bestandteils an einer Messstelle vorbeiströmt und dem Augenblick, an dem diese Gase den Eintritt der Gasturbine erreichen. Je nach Lage der Messstelle, Kraftwerksanordnung und Betriebspunkt, kann die Zeitspanne einige Sekunden bis mehrere Minuten betragen. Um eine stabile Regelung zu gewährleisten, ist es vorteilhaft, diese Zeitspanne in der Regelung zu berücksichtigen. Dafür ist Ausführung des Verfahren dadurch gekennzeichnet, dass die Regelung des Regelelements mit einer Zeitverzögerung arbeitet, die proportional zu der Zeit ist, die die Abgase von der Messstelle der Gaszusammensetzung bis zum Eintritt in die Gasturbine (6) benötigen.

Um den Einfluss des Betriebszustands der Gasturbine auf die Zeitverzögerung zu berücksichtigen, ist in einer weiteren Ausführung des Verfahren die Zeitverzögerung proportional zur Leistung der Gasturbine und/ oder Stellung der verstellbaren Verdichterleitschaufeln.

In einer Ausführung wird Abgasrezirkulation durchgeführt, um zur Reduktion der NOx Emissionen eine sauerstoffarmes Ansauggas für die Gasturbine zur Verfügung zu stellen. In einer weiteren Ausführung wird durch die Abgasrezirkulation ein sauerstoffarmes Ansauggas für die Gasturbine zur Verfügung gestellt, um ein wasserstoffreiches Brenngas stabil verbrennen zu können. Noch ein weiteres Verfahren ist dadurch gekennzeichnet, dass der zweite Abgasstrom vor der Abgabe an die Umgebung durch eine Kohlendioxid-Abscheidesystem geleitet wird und Kohlendioxid aus dem zweiten Abgasstrom abgeschieden wird. Durch dies Verfahren wird ein Abgasstrom mit einer geregelten, hohen Kohlendioxid- Konzentration an das Kohlendioxid- Abscheidesystem geliefert, wodurch die Leistungs- und Wirkungsgradeinbussen des Gesamtkraftwerkes durch die Kohlendioxid- Abscheidung minimiert werden.

Neben dem Verfahren ist ein Gasturbinenkraftwerk zur Durchführung des Verfahrens mit Abgasrezirkulation Gegenstand der Erfindung. Ein derartiges Kraftwerk umfasse eine Gasturbine mit einem Regler, einen Abhitzedampferzeuger und einen Abgasteiler, der die Abgase in einen ersten Abgasstrom zur Rezirkulation in einen Ansaugstrom der Gasturbine und in einen zweiten Abgasstrom zur Abgabe an die Umgebung teilt, sowie ein Regelelement zur Regelung des ersten Abgasstroms umfasst. Dieses Kraftwerk ist dadurch gekennzeichnet, dass in dem Regler eine Soll- Konzentration mindestens eines Bestandteils in für einen Abgasstrom und/ oder dem Ansaugstrom der Gasturbine nach Zumischung der rezirkulierten Abgase in Abhängigkeit von dem Betriebszustand bestimmt wird, und ein Messinstrument zur Messung der Ist- Konzentration dieses mindestens einen Bestandteils im Abgasstrom und/oder im Ansaugstrom nach Zumischung des ersten Abgasstroms umfasst. Die Abhängigkeit der Soll- Konzentration von dem Betriebszustand der Gasturbine kann beispielsweise durch Funktionen oder Tabellen gegeben sein.

Gemäss einer Ausführungsform des Gasturbinenkraftwerks umfasst das Kraftwerk eine Druckdifferenzmessung zwischen Abgasteiler und Position der Zumischung der Abgase in den Ansaugstrom der Gasturbine. Alternativ umfasst das Gasturbinenkraftwerk eine Ansaugdruckverlustmessung, die den Druckverlust zwischen Umgebung und Position der Zumischung der rezirkulierten Abgase in den Ansaugstrom der Gasturbine misst, und eine Abgasdruckverlustmessung, die den Druckverlust zwischen dem Abgasteiler und der Umgebung misst. Aus der Summe der beiden Druckverluste wird die Druckdifferenz zur Abgasrezirkulation bestimmt.

Alle erläuterten Vorteile sind nicht nur in den jeweils angegebenen Kombinationen, sondern auch in anderen Kombinationen oder Alleinstellung verwendbar, ohne den Rahmen der Erfindung zu verlassen. Beispielsweise kann anstelle der Verwendung eines Abgasgebläses ein Booster vorgesehen werden. Vereinfachend ist allgemein die Regelung des Regelelementes beschrieben worden. Diese steht stellvertretend für Regelung oder Steuerung. Dem Fachmann sind verschiedene Regelstrategien, wie Zweipunktregelung, Regelung mit Proportionalregler, Integral- oder IP- Regler bekannt.

Weitere Ausführungsbeispiele sind in den abhängigen Ansprüchen beschrieben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Darstellung eines Gasturbinenkraftwerks mit Rückführung der Abgase; und
- Fig. 2: schematisch die Verläufe von Eintrittsdruckverlust, Abgasdruckverlust, der Druckdifferenz für Rezirkulation und der Kohlendioxid- Konzentration am Verdichtereintritt einer Gasturbine über der Zeit nach einem Lastabwurf.

### WEGE ZUR AUSFÜHRUNG DER ERFINDUNG

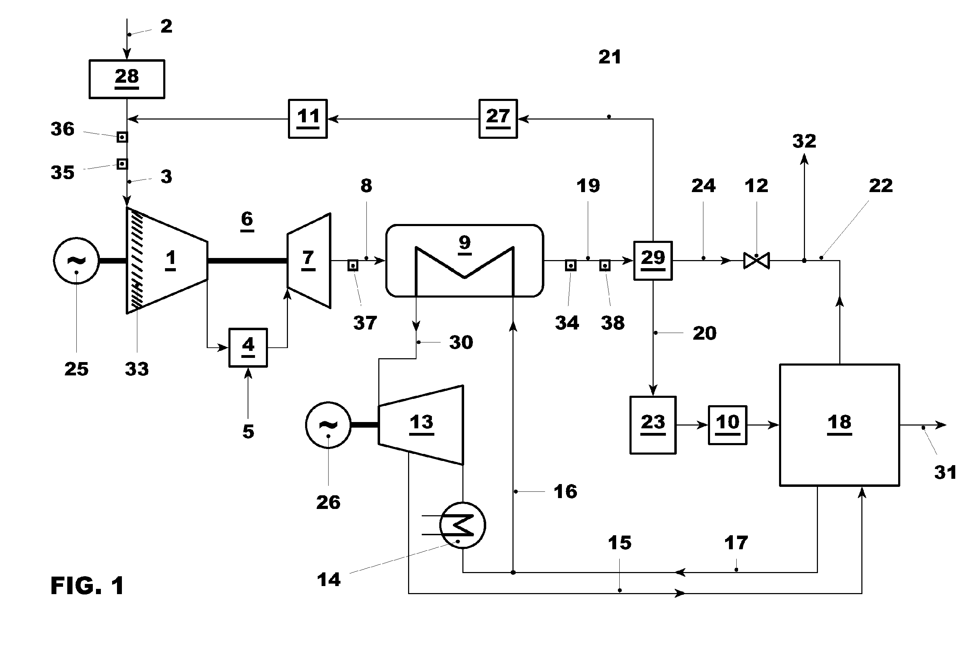

Fig. 1 zeigt in schematischer Darstellung die wesentlichen Elemente eines Gasturbinenkraftwerks. Die Gasturbine 6 umfasst einen Verdichter 1 (Kompressor), die darin verdichtete Verbrennungsluft wird einer Brennkammer 4 zugeführt und dort mit Brennstoff 5 verbrannt. Anschliessend werden die heissen Verbrennungsgase in einer Turbine 7 entspannt. Die in der Turbine 7 erzeugte Nutzenergie wird dann zum Beispiel mit einem auf der gleichen Welle angeordneten ersten Generator 25 in elektrische Energie umgewandelt.

Die aus der Turbine 7 austretenden heissen Abgase 8 werden zur optimalen Nutzung der darin noch enthaltenen Energie in einem Abhitzedampferzeuger 9 (Heat recovery steam generator, HRSG) dazu verwendet, Frischdampf 30 für eine Dampfturbine 13 oder für andere Anlagen zu erzeugen. Die in der Dampfturbine 13 erzeugte Nutzenergie wird dann zum Beispiel mit einem auf der gleichen Welle angeordneten zweiten Generator 26 in elektrische Energie umgewandelt. Der Wasserdampfkreislauf 39 ist in dem Beispiel vereinfacht und nur schematisch mit einem Kondensator 14 und Speisewasserleitung 16 dargestellt. Verschiedene Druckstufen, Speisewasserpumpen usw. werden nicht gezeigt, da diese nicht Gegenstand der Erfindung sind.

Ein Teil der Abgase vom Abhitzedampferzeuger 19 wird bei einer solchen Anlage hinter dem Abhitzedampferzeuger 9 in einem Strömungsteiler 29, welcher geregelt sein kann, in einen ersten Abgasteilstrom 21 und einen zweiten Abgasteilstrom 20 geteilt. Der erste Abgasteilstrom 21 wird in die Ansaugleitung der Gasturbine 6 zurückgeführt und dort mit Umgebungsluft 2 vermischt. Der nicht zurückgeführte zweite Abgasteilstrom 20 wird typischerweise in einem Abgasrückkühler 23 weiter gekühlt und einem Kohlendioxid Abscheidesystem 18 zugeführt. Von diesem werden Kohlendioxid- arme Abgase 22 über einen Kamin 32 an die Umgebung abgegeben. Um die Druckverluste des Kohlendioxid-Abscheidesystems 18 und der Abgasleitung zu überwinden, kann ein Abgasgebläse 10 vorgesehen sein. Das in dem Kohlendioxid- Abscheidesystem 18 abgeschiedene Kohlendioxid 31 wird typischerweise in einem Verdichter komprimiert und zur Lagerung oder weiteren Behandlung abgeleitet. Das Kohlendioxid- Abscheidesystem 18 ist über eine Dampfextraktion 15 mit Dampf, typischerweise Mittel- oder Niederdruckdampf, der aus der Dampfturbine 13 abgezweigt wird, versorgt. Der Dampf wird dem Wasserdampfkreislauf nach Energieabgabe im Kohlendioxid- Abscheidesystem 18 wieder zurückgeführt. In dem gezeigten Beispiel wird der Dampf kondensiert und über die Kondensatrückführleitung 17 dem Speisewasser zugeführt.

Der zweite Abgasteilstrom kann auch direkt über einen Abgasbypass 24 zu dem Kamin 32 geführt werden.

Der zurückgeführte Abgasstrom 21 wird in einem Abgasrückkühler 27, welcher mit Kondensator ausgestattet sein kann, auf etwas über Umgebungstemperatur abgekühlt. Stromab dieses Abgasrückkühlers 27 kann ein Booster oder Abgasgebläse 11 für den Rezirkulationsstrom 21 angeordnet sein. Dieser zurückgeführte Abgasstrom 21 wird mit der Umgebungsluft 2 vermischt, bevor das Gemisch als Ansaugstrom über den Verdichter- Eintritt 3 der Gasturbine 6 zugeführt wird. Die frische Umgebungsluft 2 wird dabei zunächst über einen Luftfilter 28 mit grossem Eintrittsquerschnitt geführt, bevor die rezirkulierten Abgase 21 zugemischt werden.

Der Ansaugstrom der Gasturbine 6 wird über die verstellbaren Verdichterleitschaufeln 33 geregelt. Der Ansaugstrom und der resultierende Abgasstrom bestimmen im wesentlichen den Ansaugdruckverlust Δpᵢₙ zwischen Umgebung und Zumischung der rezirkulierten Abgase in den Ansaugstrom der Gasturbine 6 und der Abgasdruckverlust Δpₒᵤₜ zwischen dem Abgasteiler 29 und der Umgebung. Die Druckdifferenz zwischen diesen zwei Positionen hat einen wesentlichen Einfluss auf die Menge der rezirkulierten Abgase. Zur genaueren, schnelleren Regelung wird der Ansaugdruckverlust Δpᵢₙ zwischen Umgebung und Zumischung der rezirkulierten Abgase in den Ansaugstrom mit der Ansaugdruckmessung 35 gemessen und Abgasdruckverlust Δpₒᵤₜ zwischen dem Abgasteiler 29 und der Umgebung mit der Abgasdruckmessung 34 gemessen. Die gemessenen Druckdifferenzen werden an den Regler übertragen (Regler und Messleitungen nicht dargestellt). Der Einfluss der Druckdifferenz Δpᵣₑₛ auf den rezirkulierten ersten Abgasteilstrom 21 wird in dem Regler angenährt und die Leistung des Abgasgebläses 11 angepasst und/ oder die Stellung des Abgasteilers 29 angepasst, um die Änderungen in der Druckdifferenz Δpᵣₑₛ zu berücksichtigen. Der Regler 40 und das Abgasgebläse 11 sind über den Signalaustausch zum Abgasgebläse für Abgasrezirkulation verbunden. Der Regler und der Abgasteiler 29 sind über den Signalaustausch zum Abgasteiler verbunden.

Anstelle der Druckmessungen 34, 35 kann der Differenzdruck Δpᵣₑₛ direkt gemessen werden oder die Druckdifferenz Δpᵣₑₛ als Funktion der Stellung der verstellbaren Verdichterleitschaufeln 33 angenährt werden.

Um die Konzentration von Sauerstoff im Eintrittsstrom der Gasturbine 6 regeln zu können, wird diese mit der Eintrittsstrom- Sauerstoffmessung 36 gemessen. Zusätzlich ist in dem gezeigten Beispiel eine Abgasstrom- Sauerstoffmessung 37 vorgesehen. Aufgrund der guten Durchmischung des Abgasstroms in den Abgaskanälen und im Abhitzekessel 9 ist eine Abgasstrom- Sauerstoffmessung nach dem Abhitzekessel 38 mit nur einer oder wenigen Messsonden genau durchführbar. Aufgrund der grossen Volumina wird die Abgaszusammensetzung der Gasturbine jedoch erst mit einer Zeitverzögerung gemessen, was beim transienten Betrieb der Gasturbine 6 zu Regelfehlern führen kann. In einer Ausführung wird daher die Abgasstrom- Sauerstoffmessung nach dem Abhitzekessel 38 für den stationären Betrieb genutzt und beim transieneten Betrieb eine Abgasstrom- Sauerstoffmessung 37 unmittelbar nach Austritt aus der Turbine 7 oder die Eintrittsstrom- Sauerstoffmessung 36 genutzt.

Alternativ oder in Kombination können auch eine Eintrittsstrom- Kohlendioxid- Messung 36 bzw. eine Abgasstrom- Kohlendioxid- Messung 37 und/ oder Abgasstrom-Kohlendioxid- Messung nach dem Abhitzekessel 38 vorgesehen werden.

In dem gezeigten Beispiel regelt der Regler über den Signalaustausch zur Gasturbine die Gasturbine. Weiter wird in dem gezeigten Beispiel der Wasserdampfkreislauf über den Signalaustausch zum Wasserdampfkreislauf geregelt und das Kohlendioxid-Abscheidesystem über den Signalaustausch zum Kohlendioxid- Abscheidesystem geregelt.

Alternativ haben die einzelnen Hauptkomponenten des Kraftwerks, d.h. die Gasturbine, die Dampfturbine und das Kohlendioxid- Abscheidesystem eigene Regler die miteinander kommunizieren oder von einem übergeordneten Regler geregelt werden. Dieser übergeordnete Regler ist dann der Regler, wobei die Komponentenregler nicht gezeigt sind.

Das Beispiel zeigt eine Gasturbine 6 mit einfacher Brennkammer 4. Die Erfindung ist ohne Einschränkung auch für Gasturbinen mit sequentieller Verbrennung, wie sie beispielsweise aus der EP0718470 bekannt sind, anwendbar.

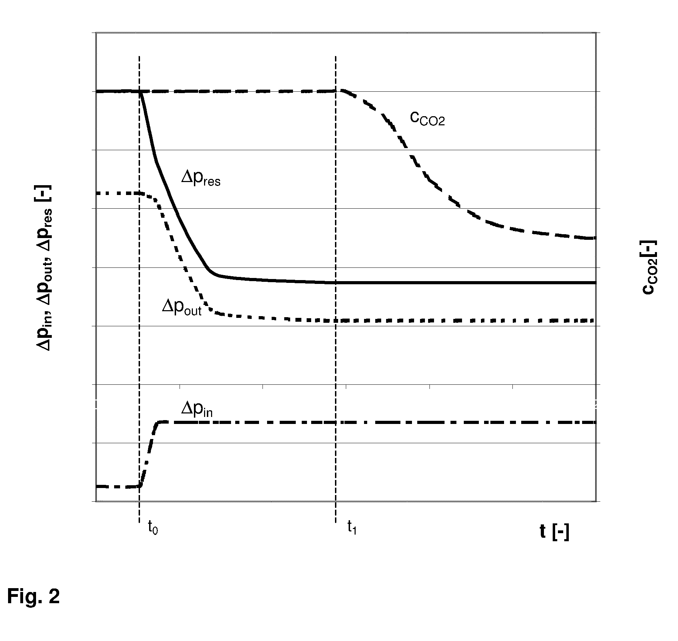

Der Verlauf des Ansaugdruckverlusts Δpᵢₙ zwischen Umgebung und Ort der Zumischung der rezirkulierten Abgase in den Ansaugstrom der Gasturbine 6 und der Abgasdruckverlust Δpₒᵤₜ zwischen dem Abgasteiler 29 und der Umgebung sowie die resultierende Druckdifferenz Δpᵣₑₛ zwischen Ansaugdruckverlusts Δpᵢₙ und Abgasdruckverlust Δpₒᵤₜ über der Zeit t ist für einen Lastabwurf als Beispiel für eine schnelle Transiente in Fig. 2 dimensionslos dargestellt. Die Druckverluste und Differenz sind dabei mit der resultierenden Druckdifferenz bei Volllast normiert. In dem Beispiel wird die Last der Gasturbine zu einem Zeitpunkt t₀ abgeworfen, d.h. der Generator 25 von dem Netz getrennt. Als Reaktion auf den Lastabwurf schliesst der Regler die verstellbaren Verdichterleitschaufeln 33, wodurch der Ansaugstrom reduziert wird und entsprechend der Ansaugdruckverlust Δpᵢₙ reduziert wird. Aufgrund der grossen Volumina von Abhitzedampferzeuger 9, der Abgasleitungen und des Kohlendioxid- Abscheidesystems 18 fällt der Abgasdruckverlust Δpₒᵤₜ zwischen dem Abgasteiler 29 und der Umgebung mit leichter Verzögerung.

Weiter ist in Fig. 2 der Verlauf der Eintrittsstrom Kohlendioxid- Konzentration über der Zeit t dargestellt. Auch wenn die Kohlendioxid- Konzentration der heissen Abgase der Gasturbine 8 praktisch ohne Zeitverzögerung nach dem Lastabwurf kleiner wird, bleibt die Kohlendioxid- Konzentration im Eintrittsstrom, unter der Annahme, dass das Rezirkulationsverhältnis konstant bleibt, zunächst bis zum Zeitpunkt t₁ konstant. Erst mit einer deutlichen Zeitverzögerung in der Grössenordnung von 0.5 bis 3 Minuten beginnt die Kohlendioxid- Konzentration im Eintrittsstrom zu sinken.

Entsprechend der sich ändernden Druckverhältnisse muss der Regler zunächst die Stellung des Abgasteilers 29 anpassen bzw. die Leistung des Abgasgebläses für den ersten Abgasteilstrom 11 anpassen. Sobald die Abgase mit geänderter Kohlendioxid-Konzentration den Eintritt der Gasturbine 6 erreichen, muss der Regler zur Kompensation die Stellung des Abgasteilers 29 anpassen bzw. die Leistung des Abgasgebläses für den ersten Abgasteilstrom 11 weiter anpassen.

### BEZUGSZEICHENLISTE

- 1: Verdichter
- 2: Umgebungsluft
- 3: Verdichter-Eintritt
- 4: Brennkammer
- 5: Brennstoff
- 6: Gasturbine
- 7: Turbine
- 8: Heisse Abgase der Gasturbine
- 9: Abhitzedampferzeuger (heat recovery steam generator, HRSG)
- 10: Abgasgebläse für den zweiten partiellen Abgasstrom (zum Kohlendioxid-Abscheide- System)
- 11: Abgasgebläse für den ersten Abgasteilstrom (Abgasrezirkulation)
- 12: Bypassklappe oder Ventil
- 13: Dampfturbine
- 14: Kondensator
- 15: Dampfextraktion für das Kohlendioxid- Abscheidesystem
- 16: Speisewasserleitung
- 17: Kondensat Rückführleitung
- 18: Kohlendioxid- Abscheidesystem
- 19: Abgas vom Abhitzedampferzeuger
- 20: Zweiter Abgasteilstrom (Abgasleitung zum Kohlendioxid- Abscheidesystem)
- 21: Erster Abgasteilstrom (Abgasrezirkulation)
- 22: Kohlendioxidarmes Abgas
- 23: Abgasrückkühler (für den zweiten Abgasteilstrom)
- 24: Abgasbypass zum Kamin
- 25: Erster Generator
- 26: Zweiter Generator
- 27: Abgasrückkühler (für den ersten Abgasteilstrom)
- 28: Filter
- 29: Abgasteiler
- 30: Frischdampf
- 31: Abgeschiedenes Kohlendioxid
- 32: Kamin
- 33: Verstellbare Verdichterleitschaufel
- 34: Abgasdruckmessung
- 35: Eintrittsdruckmessung
- 36: Eintrittsstrom Kohlendioxid- und/ oder Sauerstoffmessung
- 37: Gasturbinenabgas Kohlendioxid- und/ oder Sauerstoffmessung
- 38: Abhitzedampferzeuger- Abgas Kohlendioxid- und/ oder Sauerstoffmessung
- 39: Wasserdampfkreislauf

- C_{CO2}: Kohlendioxid- Konzentration
- Δpᵢₙ: Ansaugdruckverlust
- Δpₒᵤₜ: Abgasdruckverlust
- Δpᵣₑₛ: Druckdifferenz
- t: Zeit
- to: Startzeitpunkt einer Transienten

## Patentansprüche

1. Verfahren zum Betrieb eines Gasturbinenkraftwerkes mit Abgasrezirkulation, welches eine Gasturbine (6), einen Abhitzedampferzeuger (9) und einen Abgasteiler (29), der die Abgase (19) in einen ersten Abgasstrom (21) zur Rezirkulation in einen Ansaugstrom der Gasturbine (6) und in einen zweiten Abgasstrom (20) zur Abgabe an die Umgebung teilt, sowie ein Regelelement (11, 29) zur Regelung des ersten Abgasstroms (21) umfasst,
**dadurch gekennzeichnet, dass** abhängig von dem Betriebszustand der Gasturbine eine Soll- Konzentration mindestens eines Bestandteils in einem Abgasstrom und/oder dem Ansaugstrom der Gasturbine nach Zumischung der rezirkulierten Abgase bestimmt wird, die Ist- Konzentration dieses mindestens einen Bestandteils im Abgasstrom und/oder im Ansaugstrom gemessen wird und das Regelelement (11, 29) zur Regelung des ersten Abgasstroms (21) abhängig von der Soll- Ist- Abweichung geregelt wird.

2. Verfahren nach Anspruch 1, **dadurch gekennzeichnet, dass** die Sauerstoffkonzentration und/ oder die Kohlendioxid- Konzentration in einem Abgasströme und/ oder dem Ansaugstrom der Gasturbine nach Zumischung der rezirkulierten Abgase geregelt wird.

3. Verfahren nach einem der Ansprüche 2 oder 3, **dadurch gekennzeichnet, dass** die Soll- Konzentration in Abhängigkeit von der Leistung und/ oder den Umgebungsbedingungen bestimmt wird.

4. Verfahren nach einem der Ansprüche 1 bis 3, **dadurch gekennzeichnet, dass** die rezirkulierten Abgase in einem Abgasrückkühler (27) auf eine Rückkühltemperatur gekühlt werden, wobei die Rückkühltemperatur als Funktion der Leistung und/oder der Umgebungsbedingungen bestimmt wird.

5. Verfahren nach einem der Ansprüche 1 bis 4, **dadurch gekennzeichnet, dass** der Ansaugdruckverlust (Δpᵢₙ) zwischen Umgebung und Zumischung der rezirkulierten Abgase in den Ansaugstrom der Gasturbine (6) und der Abgasdruckverlust (Δpₒᵤₜ) zwischen dem Abgasteiler (29) und der Umgebung gemessen wird, um daraus die Druckdifferenz (Δpᵣₑₛ) zur Abgasrezirkulation zu bestimmen und/ oder die Druckdifferenz (Δpᵣₑₛ) zwischen Abgasteiler (29) und Zumischung der Abgase in den Ansaugstrom der Gasturbine (6) direkt gemessen wird und abhängig von der Druckdifferenz (Δpᵣₑₛ) die Regelung des Regelelementes (11, 29) korrigiert wird.

6. Verfahren nach einem der Ansprüche 1 bis 5, **dadurch gekennzeichnet, dass** ein regelbares Abgasgebläse (11) als Regelelement zur Regelung des Rezirkulationsstroms verwendet wird.

7. Verfahren nach Anspruch 6, **dadurch gekennzeichnet, dass** die Leistung des Abgasgebläses (11) umgekehrt proportional zur Druckdifferenz (Δpᵣₑₛ) zwischen Abgasteiler (29) und der Zumischung des rezirkulierten erste Abgasstroms (21) vergrössert wird.

8. Verfahren nach einem der Ansprüche 1 bis 7, **dadurch gekennzeichnet, dass** eine Klappe (29) und/ oder ein Ventil als Regelelement zur Regelung des Rezirkulationsstroms verwendet wird.

9. Verfahren nach Anspruch 8, **dadurch gekennzeichnet, dass** die Öffnung der Klappe in Durchlassrichtung zur Abgasrezirkulation oder die Öffnung des Ventils umgekehrt proportional zur Druckdifferenz (Δpᵣₑₛ) zwischen Abgasteiler (29) und Zumischung der Abgase in den Ansaugstrom der Gasturbine (6) vergrössert wird.

10. Verfahren nach einem der Ansprüche 1 bis 9, **dadurch gekennzeichnet, dass** die Regelung des Regelelements mit einer Zeitverzögerung arbeitet, die proportional zu der Zeit ist, die die Abgase von der Messstelle der Gaszusammensetzung bis zum Eintritt in die Gasturbine (6) benötigen.

11. Verfahren nach Anspruch 10, **dadurch gekennzeichnet, dass** die Zeitverzögerung proportional zur Leistung der Gasturbine (6) und/ oder Stellung der verstellbaren Verdichterleitschaufeln (33) ist.

12. Verfahren nach einem der Ansprüche 1 bis 11, **dadurch gekennzeichnet, dass** der zweite Abgasstrom (20) vor der Abgabe an die Umgebung durch eine Kohlendioxid- Abscheidesystem (18) geleitet wird und Kohlendioxid aus dem zweiten Abgasstrom (20) abgeschieden wird.

13. Verfahren nach einem der Ansprüche 1 bis 12, **dadurch gekennzeichnet, dass** mit dem Regelelement (11, 29) abhängig von Kohlenmonoxid- Emissionen, UHC-Emissionen und/ oder Brennkammerpulsationen der Gasturbine (6) der rezirkulierte erste Abgasstrom nachgeregelt wird.

14. Gasturbinenkraftwerk mit Abgasrezirkulation, welches eine Gasturbine (6) mit einem Regler, einen Abhitzedampferzeuger (9) und einen Abgasteiler (29), der die Abgase (19) in einen ersten Abgasstrom (21) zur Rezirkulation in einen Ansaugstrom der Gasturbine (6) und in einen zweiten Abgasstrom (20) zur Abgabe an die Umgebung teilt, sowie ein Regelelement zur Regelung des ersten Abgasstroms (21) umfasst,
**dadurch gekennzeichnet, dass** in dem Regler eine Soll- Konzentration mindestens eines Bestandteils in für einen Abgasstrom und/ oder dem Ansaugstrom der Gasturbine nach Zumischung der rezirkulierten Abgase in Abhängigkeit von dem Betriebszustand vorgegeben ist, und es ein Messinstrument (36, 37, 38) zur Messung der Ist- Konzentration dieses mindestens einen Bestandteils im Abgasstrom und/oder im Ansaugstrom nach Zumischung des ersten Abgasstroms (21) umfasst.

15. Gasturbinenkraftwerk nach Anspruch 14, **dadurch gekennzeichnet, dass** eine Druckdifferenzmessung zwischen Abgasteiler (29) und Position der Zumischung der Abgase in den Ansaugstrom der Gasturbine (6) vorgesehen ist und/ oder eine Ansaugdruckmessung (35), die den Ansaugdruckverlust (Δpᵢₙ) zwischen Umgebung und Position der Zumischung der rezirkulierten Abgase in den Ansaugstrom der Gasturbine (6) misst, und eine Abgasdruckmessung (34), die den Abgasdruckverlust (Δpₒᵤₜ) zwischen dem Abgasteiler (29) und der Umgebung misst, bestimmt wird, um aus der Summe der beiden Druckverluste (Δpᵢₙ, Δpₒᵤₜ) die Druckdifferenz (Δpᵣₑₛ) zur Abgasrezirkulation zu bestimmen.
